# DEMANDE DE BREVET EUROPEEN

(11) **EP 0 537 047 A1**
(43) Date de publication de la demande: **14.04.1993**
(21) Numéro de dépôt: 92402659.4
(22) Date de dépôt: 29.09.1992
(51) Int. Cl.: H01B 1/12, C08G 61/12, C08K 3/34, C08K 7/00

(54) **Matériau composite conducteur, peinture et capteur utilisant ce matériau conducteur**

(30) Priorité: 08.10.1991 FR 9112349
(71) Demandeur: THOMSON-CSF, 75008 Paris (FR)
(72) Inventeur: Mahe, Loic, THOMSON-CSF, F-92045 Paris la Défense (FR); Laszlo, Pierre,THOMSON-CSF, F-92045 Paris la Défense (FR); Dubois, Jean-Claude, THOMSON-CSF, F-92045 Paris la Défense (FR); Sagnes, Olivier, THOMSON-CSF, F-92045 Paris la Défense (FR)
(74) Mandataire: Guérin, Michel

(57) **Abrégé**

L'invention concerne de nouveaux matériaux composites à base d'argile de type phyllosilicate et de polymère conducteur pouvant être associés à des composés liants filmogènes en vue d'obtenir des revêtements conducteurs. L'invention concerne également un procédé d'obtention de ces nouveaux composites. L'avantage de ces matériaux réside dans la possibilité d'obtenir de bonnes conductivités pour des charges en polymères conducteurs plus faibles que celles utilisées dans les composites chargés avec des polymères conducteurs seuls.

## Description

Le domaine de l'invention est celui des matériaux à base de polymères conducteurs pouvant être utilisés dans les revêtements antistatiques ou plus généralement dans les domaines utilisant des peintures conductrices ou des composites conducteurs.

Les polymères conducteurs peuvent être obtenus par synthèse chimique oxydative qui conduit à l'élaboration de particules de matériaux conducteurs dispersables dans un matériau liant. La dispersion dans un liant peut être réalisée à partir d'un latex de polymère conducteur dont les particules sont stabilisées par des agents surfactants. L'obtention de particules conductrices en solution permet d'intégrer celles-ci de manière contrôlée à une matrice liante le polymère, soluble dans la solution de latex conducteur, ou le type latex polymère liant Le matériau composite ainsi obtenu offre des propriétés conductrices intéressantes lorsque les particules conductrices dispersées dans le matériau sont suffisammernt nombreuses et proches pour assurer une conduction macroscopique. Cependant une quantité importante de particules conductrices confèrent au matériau un comportement mécanique voisin de celui des polymères conducteurs, rendant le matériau composite cassant, peu filmogène et donc difficile à exploiter industriellement. Dans ce contexte, l'invention propose d'associer les monomères des polymères conducteurs, à des argiles de type phyllosilicates dont le pouvoir oxydant permet la polymérisation lesdits monomères. L'intérêt de ce type d'argile réside dans leur structure en feuillets chargés négativement et comprenant de nombreux cations adsorbés à leur surface pour neutraliser l'ensemble. En effet la grande surface spécifique chargée de ces argiles permet d'inclure un grand nombre de molécules organiques dans les espaces interfoliaires conférant aux argiles des propriétés favorables en catalyse ; en l'occurence la polymérisation conduite en deux dimensions à la surface des feuillets génère des chaînes de polymère qui ne peuvent s'imbriquer (ou se ramifier) entre elles dans un espace à trois dimensions, ce qui est favorable à la conductivité du matériau résultant. Ainsi lorsque lion disperse les feuillets d'argiles associés aux chaînes de polymère conducteur dans une matrice liante isolante on peut obtenir de bonnes propriétés mécaniques avec un faible taux d'entités conductrices mais qui sont agencées de telle manière que la conduction résultante est améliorée par rapport à celle obtenue à partir de particules conductrices constituées de chaînes le polymère conducteur désorganisées car la conjugaison d'une chaîne de polymère insaturé est d'autant meilleure qu'elle est plane.

Plus précisément, l'invention propose un procédé d'obtention de matériaux composites à base d'argile de type phyllosilicate et de polymère conducteur caractérisé en ce qu'il comprend les étapes suivantes :
- la réalisation d'une suspension stable d'argile dans un solvant en concentration optimisée ;
- la polymérisation chimique de monomère du polymère conducteur mis dans ladite suspension stable au contact de l'argile servant de catalyseur et de support.

De préférence le polymère conducteur synthétisé est un polymère hétérocycle de type polypyrrole ou polythiophène.

De préférence l'argile utilisée est la montmorillonite. L'invention a aussi pour objet le matériau conducteur obtenu par le procédé précédemment décrit. Elle a encore pour objet tout matériau conducteur composite comprenant une argile de type phyllosilicate et un polymère conducteur hétérocycle.

Enfin l'invention a pour objet :
- le matériau composite utilisable comme revêtement conducteur, ce matériau pouvant être une peinture conductrice caractérisée en ce qu'elle comprend des particules conductrices composites d'argile de type phyllosilicate et de polymère conducteur, des agents surfactants desdites particules conductrices et un agent liant macromoléculaire,
- ou le matériau composite comprenant des particules conductrices selon l'invention enrobées de thermoplastique et constituant ainsi des pièces conductrices.

L'invention sera mieux comprise et d'autres avantages apparaîtront à la lecture de la description et des exemples qui vont suivre, donnés à titre non limitatif.

Les argiles employées sont des aluminosilicates de formule idéale (Al₂O₃)ₓ(SiO₂)_{y}H₂O. Les cations Al³⁺ sont liés à des atomes d'oxygène dans un environnement octaédrique et la répétition en deux dimensions des unités AlO₆ forme une couche dite octaédrique (O). De la même façon une couche tétraédrique (T) est obtenue à partir de groupements silicates SiO₄. Ces couches se combinent en feuillets et il existe différents types d'empilements des couches (T) et (O) dans un feuillet élémentaire qui définissent ainsi une classification des argiles phyllosilicates. De préférence, l'invention s'intéresse à la montmorillonite, de type (T)(O)(T), qui présente l'intérêt de pouvoir gonfler en solution grâce à l'intercalement de molécules de solvant (l'eau ou un autre liquide polaire) entre les feuillets chargés pour solvater les cations lamellaires. La capacité d'échange cationique de la montmorillonite est de l'ordre de 1 mole/kg de cations univalents, permettant à cette argile d'inclure un grand nombre de molécules organiques dans ses espaces interfoliaire. Ces propriétés, associées à une surface spécifique élevée de l'ordre de 500m²/g, rendent la montmorillonite particulièrement intéressante en tant que catalyseur et support de réaction ; lorsque l'on s'intéresse à la synthèse de polymères conducteurs il peut être avantageux d'élaborer de la montmorillonite échangée au Fe^{III}, c'est-à-dire de remplacer des cations adsorbés à la surface des feuillets d'argile par des ions Fe³⁺, renforçant les propriétés oxydantes de l'argile. Le procédé d'obtention est le suivant :
80 g d'argile montmorillonite K10 provenant de Süd-Chemie AG (Munich) sont plongés dans 1 litre de solution de FeCl₃ (1 mole/e). L'ensemble est agité durant 24 heures, la suspension d'argile est centrifugée puis lavée avec de l'eau jusqu'à la disparition des ions Cl⁻. L'argile échangée au Fe^{III} est ensuite séchée à 120°C pendant 12 heures.

La montmorillonite ainsi obtenue de préférence échangée au fer^{III} est alors mise en solution de manière à réaliser une suspension stable dans laquelle le solvant parvient à écarter les feuillets élémentaires et ainsi à faire pénétrer le monomère capable de polymériser au contact de l'argile. L'intérêt d'obtenir une suspension stable réside dans le fait d'isoler au maximum les particules d'agiles les unes des autres et d'écarter au maximum les feuillets l'argile et ainsi faire diffuser le plus possible de monomère au sein des structures d'argile. On peut renforcer l'opération d'écartement des feuillets en solution en traitant la soluition colloïdale aux ultra-sons. On ajoute le monomère et l'on laisse agir, rapidement l'argile devient foncée témoignant de l'apparition d'un polymère conducteur résultant d'une opération d'oxydation. On centrifuge alors l'ensemble de manière à isoler du solvant le solide composite argile/polymère conducteur. Il est possible de suroxyder ce qui revient à surdoper le matériau obtenu en vue d'en augmenter la conductivité si cela s'avère nécessaire. Pour cela le solide composite est remis en suspension aqueuse en présence d'oxydant pouvant être du chlorure ferrique. Après centrifugation, évacuation du solvant et séchage à la température ambiante sous courant d'air on obtient le matériau conducteur composite surdopé.

A titre d'exemple une suspension stable de montmorillonite dans l'eau ou le méthanol est obtenue pour une concentration de 5 g/l. Cette solution est agitée mécaniquement durant 10 minutes. On y introduit alors le monomère de préférence hétérocycle de type pyrrole ou thiophène, pouvant être substitués. Il est en effet intéressant d'utiliser des hétérocycles car il est chimiquement facile d'y greffer les substituants permettant de bloquer les positions d'éventuelles ramifications peu favorables à la conduction. Le monomère est introduit en concentration optimisée soit environ 10⁻² mole/l dans le cas du pyrrole. En effet il existe une concentration optimale correspondant à l'occupation de tous les sites de polymérisation/oxydation au-delà de laquelle la conductivité n'augmente plus. L'insertion du monomère dans l'espace interfoliaire est favorisée par un traitement aux ultra-sons permettant d'écarter davantage les feuillets de l'argile. La cinétique de la polymérisation peut être suivie par des mesures de conductivités effectuées sur des échantillons obtenus avec différents temps t. Pour des temps de polymérisation t qui s'étendent de 2 à 500 minutes, on n'observe une augmentation significative de la conductivité que dans les dix premières minutes prouvant qu'au-delà de ce temps la polymérisation n'évolue pratiquement plus. Des mesures de conductivité ont été effectuées en introduisant l'argile K10 échangée au Fer^{III} et l'argile K10 échangée au Fer^{III} traité au pyrrole (concentration 10⁻² mole/l et temps de polymérisation 10 minutes), sous forme de poudre dans une cavité résonante à 2,45 GHz et la mesure de la partie imaginaire de leur constante diélectrique déterminée par rapport à celle de l'eau conduit aux conductivités σ suivantes :
Argile sans polypyrrole : σ = 10 ⁻³S/cm
Argile avec polypyrrole : σ = 4.10⁻³ S/cm

Des expériences de thermogravimétrie ont été conduites avec les matériaux composites selon l'invention exhibant la présence de matière organique au sein des argiles (à raison de 12,5 % en masse pour la montmorillonite K10 échangée au Fer^{III} chargée de polypyrrole (concentration en monomère 1 mole/l, temps de polymérisation : 10 minutes).

Des études menées au microscope électronique à balayage (MEB) montrent que l'examen à faibles grossissements (jusqu'à 6 000) d'échantillons non métallisés de montmorillonite K10 échangée au Fer^{III} est possible et que la résolution de l'image est meilleure pour les composites argile/polymère (la mise au point est toujours possible jusgu'à des grossissements de 20 000), prouvant que la conductivité surfacique du matériau composite est supérieure à celle de l'argile pure. Les particules d'argile de type phyllosilicate sont donc entourées d'une couche de polymère conducteur et l'examen des photographies prises au MEB suggère que le dépôt superficiel est d'épaisseur uniforme. L'aspect d'une poudre A (montmorillonite seule) et celui d'une poudre B (montmorillonite/polymère conducteur) au MEB révèlent l'agrandissement de la taille moyenne des grains d'argile après polymérisation. Et une étude plus fine aux rayons X permet de comparer les distances interfoliaires de la montmorillonite échangée au Fer^{III} et la même argile chargée de polymère conducteur. Dans le premier cas cette distance est égale à 14,1 Å alors que dans le second cas elle est égale à 14,9 Å.

Ces différentes observations permettent de déduire qu'en plus du dépôt surfacique, le polypyrrole est logé au sein des espaces interfoliaires de la montmorillonite.

Lorsque l'on a élaboré le matériau composite argile phyllosilicate/polymère conducteur il est possible d'en arcroître la conductivité en le trempant dans une solution aqueuse de chlorure ferrique par exemple. Pour cela il existe une concentration optimale de cette solution dopante. Dans le cas de la montmorillonite K10 échangée Fe^{III} associé au polypyrrole (concentration en pyrrole 10⁻² mole/l), on observe une augmentation de la conductivité progressive lorsque la concentration de la solution dopante passe de 0 à 10⁻⁶ mole/l, ce qui correspond vraisemblablement au dopage des oligomères qui ne sont pas directement en contact avec les feuillets d'argile (il existe des irrégularités de structure). Cependant au-delà de cette concentration, la conductivité chute ceci est sans doute dû au remplacement partiel de dopants initiaux par le chlorure ferrique aqueux qui déforme la géométrie initialement plane du polymère.

Lorsque l'on a réalisé le matériau composite argile/polymère conducteur selon l'invention, on peut l'intégrer à différents composés en vue de l'exploiter industriellement :
Pour en faire une peinture, on peut réaliser une suspension stable de particules conductrices selon l'invention en mettant ces dernières en solution avec des agents surfactants classiques et des agents liants pouvant être un polymère dissous dans le solvant de la suspension ou un polymère en émulsion. On sait en effet réaliser des latex de copolymère styrène-acrylate utilisables comme agent liant de particules conductrices. L'avantage d'employer un bain de particules conductrices stabilisées et de particules d'agent liant réside dans le codépôt des deux types de particules conduisant à un revêtement très homogène après évaporation du solvant. Les particules composites selon l'invention peuvent ainsi être utilisées pour des revêtements conducteurs à bonne tenue mécanique puisque les analyses structurelles desdites particules montrent qu'il s'agit de particules d'argile enrobées de polymère conducteur à l'intérieur desquelles il y a également des chaînes conductrices ; ceci conduisant à des entités conductrices composites de plus grande envergure que celle des particules de polymère conducteur. On obtient donc la même conductivité macroscopique pour un taux d'entités conductrices plus faible dans le cas des particules conductrices selon l'invention par rapport à des particules de polymère conducteur.

Enfin les particules selon l'invention peuvent être insérées dans des polymères thermoplastiques de type polyéthylène ou polychlorure de vinyle, pouvant être moulés pour obtenir toute sorte de pièces conductrices.

Cette suspension argile/polymère conducteur peut être en outre déposée par des méthodes de spray pour former un film mince conducteur ; ce film déposé à la surface d'une électrode peut permettre la réalisation de capteurs performants du fait de la forte surface d'échange associée à la sensibilité des phénomènes électrochimiques d'oxydoréduction. La fixation ou le largage d'une entité (type anticorps-antigène ou médicament) modifiera le domaine d'apparition des pics d'oxydation et/ou de réduction ce qui corrélé à une solution étalan indique l'existence d'un tel phénomène et peut permettre de l'évaluer quantitativement.

## Revendications

1. Procédé d'obtention de matériaux composites à base d'argile de type phyllosilicate et de polymère conducteur, caractérisé en ce qu'il comprend les étapes suivantes :
- la réalisation d'une suspension stable d'argile dans un solvant en concentration optimisée ;
- la polymérisation chimique de monomère du polymère conducteur mis dans ladite suspension stable au contact de l'argile servant de catalyseur et de support.

2. Procédé selon la revendication 1, caractérisé en ce que le polymère conducteur est un hétérocycle.

3. Procédé selon la revendication 2, caractérisé en ce que l'argile est la montmorillonite.

4. Matériau composite conducteur à base d'argile de type phyllosilicate et de polymère conducteur, caractérisé en ce qu'il est obtenu par le procédé selon la revendication 1.

5. Matériau composite conducteur à base d'argile de type phyllosillicate et de polymère conducteur, caractérisé en ce que le polymère conducteur est un hétérocycle et qu'il est situé notamment entre les lamelles d'un feuillet élémentaire d'argile.

6. Peinture conductrice, caractérisée en ce qu'elle comprend des particules conductrices composites d'argile de type phyllosilicates et de polymère conducteur, les agents surfactants desdites particules conductrices et un agent liant macromoléculaire.

7. Matériau composite conducteur, caractérisé en ce qu'il comprend un thermoplastique et des charges conductrices constituées de particules composites d'argiles de type phyllosilicates et de polymère conducteur.

8. Capteur à base de matériau composite conducteur, caractérisé en ce que le matériau composite comprend de l'argile de type phyllosilicate et du polymère conducteur et que ledit matériau est déposé à la surface d'une électrode.
